# EUROPEAN PATENT APPLICATION

(11) **EP 1 408 495 A2**
(43) Date of publication of application: **14.04.2004**
(21) Application number: 03256450.2
(22) Date of filing: 13.10.2003
(51) Int. Cl.: G11B 15/22, G11B 15/665

(54) **Reel brake assembly**

(30) Priority: 12.10.2002 KR 2002062299
(71) Applicant: SAMSUNG ELECTRONICS CO., LTD., Suwon-City, Kyungki-do (KR)
(72) Inventor: Choi, Do-young, 715-1801,Hyundai-seongwoo Apt., Suwon-city Gyunggi-do (KR); Park, Byeng-bae, Ansan-city Gyunggi-do (KR); Kim, Jun-young, 212-1301, Hangook Apartment, Suwon-city Gyunggi-do (KR)
(74) Representative: Geary, Stuart Lloyd

(57) **Abstract**

A reel brake assembly for a tape drive, comprises a sub deck 20 slidably disposed on a main deck and having a rotatable reel table 21 thereon, and a cam gear 40 driveable by a motor 16 to move the sub deck between loaded and unload positions. A head drum 11 is mounted on the main deck. Movement of the cam gear also operates the brake unit appropriately to be brought into contact with and separated from the reel table. The brake unit includes a first and second coaxial brakes 31, 33 pivotally disposed in the sub deck and resiliently biased into contact with the reel table. The brakes have guide pin 31a, 33a protruding therefrom, which contact a guide groove 43 of the cam gear

## Description

The present invention relates to a reel brake assembly for a tape drive, comprising: a sub deck slidably disposed on a main deck; a reel table, rotatably disposed on the sub deck; a brake unit pivotally disposed on the sub deck, and a driveable gear,

Well known is magnetic recording/reading apparatus which records information on a recording medium, such as a magnetic tape, and reads recorded information therefrom. Video cassette tape recorders and camcorder are commonly found examples.

Such apparatus tends to comprise a main deck on which a head drum is rotatably disposed, a sub deck reciprocally slidable relative to the main deck, a pair of reel tables, for driving a tape reel of a tape cassette, rotatably disposed on the sub deck, and a reel brake assembly. The reel brake assembly prevents excessive movement of the reel table that might be caused by inertia occurring when the reel table stops rotating during a stop mode, which can result in some of the tape being run out or drawn in unnecessarily.

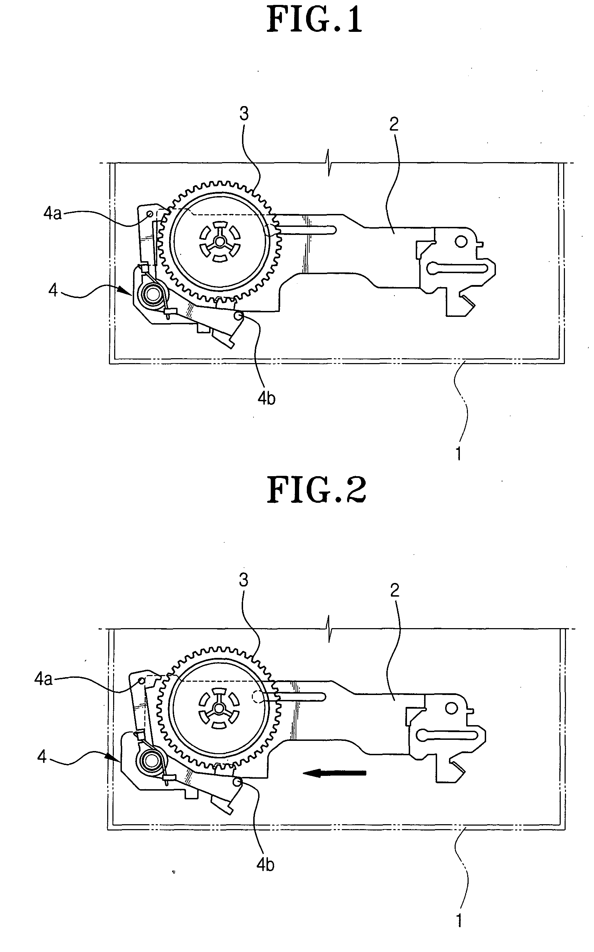

As shown in Figure 1, a reel brake assembly includes a first brake 4 and a second brake (not shown) for stopping the right and the left reel tables (not shown) respectively. The first brake 4 corresponds to the left side reel table, which is a supply side reel table , operates in response to horizontal movement of a main slider 2 along the main deck 1. That is, the main slider 2 is moved by a driving force transmitted from a driving motor, and horizontally moves in association with a cam gear 3 for loading and unloading the sub deck. When the sub deck is loaded, the main slider 2 moves to the left to contact and push contact pins 4a and 4b of the first brake 4. Then, as the first brake 4 is pushed by the main slider 2 and separated from the reel table, a play condition is started, and the tape is released from the tape cassette.

When the sub deck is unloaded, the main slider 2 moves to the right, and the first brake 4 returns to the original position to come into contact with the reel tables, thereby preventing further rotation of the reel tables.

In order to drive the brake assembly, the main slider 2 has to have a sufficient length that it can contact the first brake 4 and a sufficient width that it can contact the parts 4 and 4a. Main sliders therefore tend to occupy quite a large space and require a substantial amount of material, leading to weight and cost disadvantages. These factors are now important considerations. It is thus desirable for the main slider 2 to have a shortened length and width.

An aim of the invention is to provide a reel brake assembly for a recording/reading apparatus having an improved and/or simplified structure and operation.

The invention is characterised in that the driveable gear is a cam gear and in that movement of the cam gear as the sub deck is moved between loaded and unloaded positions operates the brake unit appropriately to be brought into contact with and separated from the reel table.

In the embodiments, the brake unit is brought into contact with the reel table as the sub deck is moved from an unloaded position to a loaded position, and vice versa, to brake the reel table.

Embodiments of the present invention will now be described, by way of example only, with reference to the accompanying drawings, of which:
Figures 1 and 2 are schematic plan views showing a reel brake assembly for a conventional magnetic recording/reading apparatus; and
Figures 3 and 5 are schematic plan views showing a reel brake assembly for a magnetic recording/reading apparatus according to the present invention, in loaded and unloaded states respectively; and
Figure 4 is a perspective view of a reel cover forming part of the Figures 3 and 5 assembly.

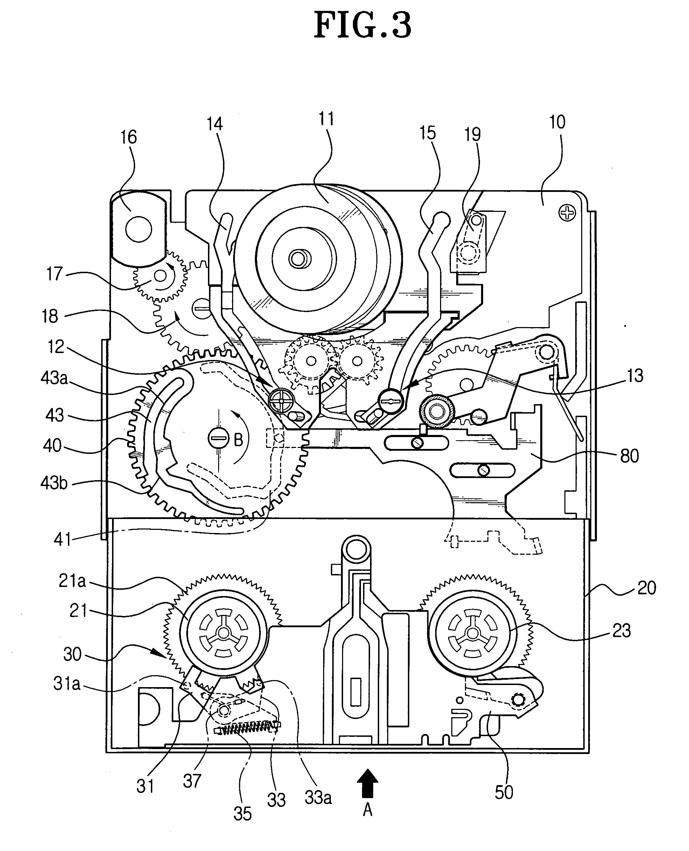

Referring to Figures 3 to 5, a reel brake assembly for a magnetic recording/reading apparatus includes a main deck 10 on which a head drum 11 is disposed, a sub deck 20 slidably disposed on the main deck 10, a pair of reel tables 21 and 23 for driving a tape cassette on the sub deck 20, a brake unit 30, and a cam gear 40. Figure 3 shows an unloaded state of the sub deck 20.

The main deck 20 is provided with a pair of pole base units 12 and 13, for guiding a tape to the right and the left of the head drum 11, so that the tape is wound around the head drum 11 as it runs. The pole base units 12 and 13 respectively reciprocate along guide rails 14 and 15 provided on the main deck 10 in response to movement of the cam gear 40. The main deck 10 may be provided with a plurality of guide poles (not shown) for guiding a running of the tape on the main deck 10.

The main deck 10 is provided with a driving motor 16 for supplying a driving force to reciprocate the pole base units 12 and 13, and thus load and unload the sub deck 20. The driving force of the driving motor 16 is transmitted to the cam gear 40 via driving force transmitting gears 17 and 18.

The sub deck 20 is loaded on the main deck 10 in a direction A in association with rotation of the cam gear 40, and is unloaded in the reverse direction. The sub deck 20 is provided with a pair of reel tables 21 and 23 for driving tape reels of the tape cassette. The reel table 21 at the left in the drawing operates to supply a wound tape, and is called a supply reel. The reel table 23 at the right in the drawing operates to wind the tape supplied from the supply reel, and is called a take up reel. The reel tables 21 and 23 are driven by a force transmitted from a capstan motor 19 disposed in the main deck 10.

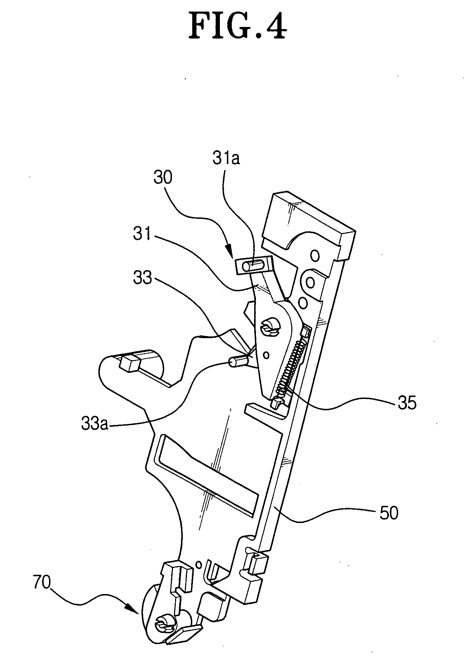

The brake unit 30 is pivotally disposed on the sub deck 20, for selectively controlling a rotation of the reel table 21. The brake unit 30 includes a first brake 31, a second brake 33, a coil spring 35, and a torsion spring 37. The brake unit 30 is supported by a reel cover 50 disposed at an upper portion of the sub deck 20. The reel cover 50 is shown from another angle in Figure 4. The first brake 31 is pivotally disposed on the reel cover 50 with one end thereof contacting with, and separated from, the reel table 21 as the first brake 31 pivots. The coil spring 35 is connected with the other end of the first brake 31 and the reel cover 50, and compresses the first brake 31 so that it comes into contact with the reel table 21. The second brake 33 is disposed coaxially with the first brake 31 and pivots selectively to contact or become separated from the gear teeth 21a of the reel table 21. A torsion spring 37 is disposed between the second brake 33 and the first brake 31. The torsion spring 37 elastically compresses the second brake 33 so that the second brake 33 comes into contact with the gear teeth 21 a of the reel table 21. The reel cover 50 is further provided with a brake unit 70 for controlling a rotation of the other reel table 23. A detailed description of the brake unit 70 is omitted because the brake unit 70 can be a general brake assembly operating with a main slider 80.

The brake unit 30 operates in association with the cam gear 40. The first and second brakes 31 and 33 have first and second guide pins 31 a and 33a, respectively, depending from a lower portion thereof. Also, the sub deck 20 has guide holes (not shown) formed therein for permitting the first and the second guide pins 31a and 33a to pass therethrough.

The cam gear 40 is rotatably disposed on the main deck 10. The cam gear 40 is rotated by the driving force transmitted from the driving motor 16, and has gear teeth reciprocating the pole base units 12 and 13. Also, the cam gear 40 has a first guide groove 41 of a predetermined shape (see Figure 3 in particular) formed in a lower portion thereof, for guiding the main slider 80 to move horizontally on the main deck 10.

The cam gear 40 also has a second guide groove 43 disposed in an upper portion thereof, for moving the brake unit 30. The second guide groove 43 extends in a circumferential direction of the cam gear 40, with varying radii from the rotational axis of the cam gear 40.

The first and the second guide pins 31a and 33a are inserted into the second guide groove 43 when the sub deck 20 is loaded. The first and the second guide pins 31a and 33a are cam guided to move the first and the second brakes 31 and 33. That is, when the cam gear 40 rotates to load the sub deck 20 in the direction of A, the first and the second guide pins 31 a and 33a are smoothly guided by the second guide groove 43.

The second guide groove 43 has a first curved guide portion 43a, for guiding the first guide pin 31 a, and a second guide portion 43b protruding from the first guide portion 43a outwardly from the first guide portion 43a relative to the rotational axis of the cam gear 40. The second guide portion 43b guides and moves the second guide pin 31 b.

The operation of the reel brake assembly will now be described.

After a tape cassette (not shown) is mounted in the sub deck 20 in the state of Figure 3, the sub deck 20 is loaded in the direction of A by the driving of the driving motor 16. At this stage, the first and the second brakes 31 and 33 are in contact with the reel table 21. The cam gear 40 rotates in the direction of B, thereby loading the sub deck 20 and moving the pole base units 12 and 13, simultaneously.

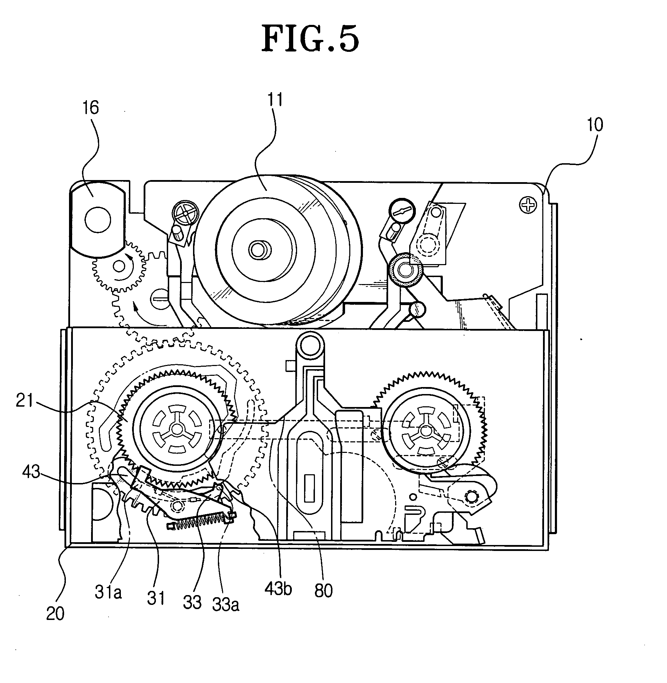

When the sub deck 20 is completely loaded as shown in Figure 5, the cam gear 40 independently rotates. Here, the pole base units 12 and 13 are moved to the right and the left respectively of the head drum 11 to support the tape. The main slider 80 is guided by the first guide groove 41 of the cam gear 40 to move to the left.

When the sub deck 20 is completely loaded in the direction A, the guide pins 31 a and 33a of the first and the second brakes 31 and 33 are found in the upper portion of the second guide grove 43 of the cam gear 40.

In this state, when the cam gear 40 is rotated in the direction B, the first guide pin 31a is guided to the first guide portion 43a to pivot the first brake 31. Also, the second guide pin 33a is guided to the second guide portion 43b to pivot the second brake 33. Accordingly, the first and the second brakes 31 and 33 are separated from the reel table 21. Accordingly, the reel table 21 can rotates when driven by the capstan motor 19.

When the sub deck 20 is unloaded, the cam gear 40 rotates in the reverse direction. Accordingly, the first and the second guide pins 31a and 33a are separated from second guide groove 43 such that the first and the second brakes 31 and 33 again come into contact with the reel table 21. The sub deck 20 thus returns to the state as shown in Figure 3.

As described above, the brake unit 30 is operated in association with the rotation of the cam gear 40. Moving the main slider 80 to operate the brake unit, as occurs in the conventional apparatus, is not required and thus the length and other dimensions of the main slider 80 can be reduced, reducing fabrication costs.

In another embodiment (not shown), the brake unit 30 is disposed in the upper portion of the sub deck 20, instead of being supported by the reel cover 50.

It will be understood by those skilled in the art that the present invention is not limited to the described embodiments, but that various changes and modifications can be made within the scope of the invention as defined by the claims.

## Claims

1. A reel brake assembly for a tape drive, comprising:
a sub deck (20) slidably disposed on a main deck;
a reel table (21), rotatably disposed on the sub deck;
a brake unit (30) pivotally disposed on the sub deck; and
a gear (40) driveable by a motor (16) to move the sub deck between loaded and unload positions,
**characterised in that** the driveable gear is a cam gear and **in that** movement of the cam gear operates the brake unit appropriately to be brought into contact with and separated from the reel table.

2. A reel brake assembly as claimed in claim 1, where the brake unit includes a first brake (31) pivotally disposed in the sub deck and resiliently biased into contact with the reel table.

3. An assembly as claimed in claim 2, wherein the brake unit comprises a second brake (33) pivoted coaxially with the first brake.

4. A reel brake assembly as claimed in claim 3, wherein the second brake is resiliently biased into contact with the reel table.

5. A reel brake assembly as claimed in claim 4, wherein the second brake is resiliently biased into contact with a gear portion (21) aof the reel table.

6. A reel brake assembly as claimed in any of claims 3 to 5, wherein each brake has a cam gear contacting guide pin (31 a, 33a) protruding therefrom.

7. A reel brake assembly as claimed in claim 6, wherein the cam gear includes a guide (43) for guiding the first and the second guide pins sequentially.

8. A reel brake assembly as claimed in any preceding claim, wherein the brake unit is guided by the cam during loading of the sub deck, and separated from the cam during unloading of the sub deck.

9. A reel brake assembly for a magnetic recording/reading apparatus, comprising:
a sub deck slidably disposed on a main deck in which a head drum is mounted;
a reel table, rotatably disposed in the sub deck, and adapted to selectively drive a tape reel of a tape cassette;
a brake unit, pivotally disposed on the sub deck, and adapted to selectively brake the reel table; and
a cam gear, adapted to be rotated by a driving force of a driving motor, to move the sub deck to load and unload the sub deck, such that the brake unit is selectively brought into contact with and separated from the reel table in relation to movement of the cam gear when the sub deck is loaded and unloaded.

10. A reel brake assembly as claimed in claim 9, where the brake unit includes:
a first brake rotatably disposed in the sub deck and adapted to contact and become separated from the reel table;
a spring, adapted to compress the first brake so that the first brake comes into contact with the reel table; and
a second brake, disposed coaxially with respect to the first brake, and which is adapted to pivot with the first brake in a direction to separate the first brake from the reel table, and adapted to independently rotate in the reverse direction in contact with the reel table.

11. A reel brake assembly as claimed in claim 10, wherein the brake unit further includes a torsion spring, adapted to apply a force to the second brake so that the second brake comes into contact with the reel table.

12. A reel brake assembly as claimed in claim 3, wherein the torsion spring is adapted to apply the force to the second brake so that the second brake comes into contact with a gear portion of the reel table.

13. A reel brake assembly as claimed in claim 10, wherein the first and the second brakes have first and second guide pins, respectively, protruding from the respective lower portions thereof, which are adapted to be guided in contact with the cam gear.

14. A reel brake assembly as claimed in claim 13, wherein the cam gear has a guide groove formed in a rotation direction of the cam gear, which is adapted to guide the first and the second guide pins sequentially.

15. A reel brake assembly as claimed in claim 9, wherein the cam gear has a guide grove, formed in an upper portion thereof in a rotation direction of the cam gear, which is adapted to guide the brake unit.

16. A reel brake assembly as claimed in claim 15, wherein the brake unit is adapted to be guided along the guide groove with the loading of the sub deck, and separated from the guide groove with the unloading of the sub deck.
